# EUROPÄISCHE PATENTSCHRIFT

(11) **EP 3 568 514 B1**
(45) Veröffentlichungstag und Bekanntmachung des Hinweises auf die Patenterteilung: **27.07.2022**
(21) Anmeldenummer: 18700030.2
(22) Anmeldetag: 03.01.2018
(51) Int. Cl.: D06B 3/04, D06B 5/06, D01D 5/096, F04C 2/08, F04C 13/00

(54) **VORRICHTUNG ZUR BENETZUNG MEHRERER FÄDEN UND DOSIERPUMPE FÜR EINE DERARTIGE VORRICHTUNG**
DEVICE FOR WETTING A PLURALITY OF THREADS, AND METERING PUMP FOR SUCH A DEVICE
DISPOSITIF DE MOUILLAGE DE PLUSIEURS FILS ET POMPE DE DOSAGE POUR UN DISPOSITIF DE CE TYPE

(30) Priorität: 12.01.2017 DE 102017000243; 27.01.2017 DE 102017000760
(43) Veröffentlichungstag der Anmeldung: 20.11.2019
(73) Patentinhaber: Oerlikon Textile GmbH & Co. KG, 42897 Remscheid (DE)
(72) Erfinder: SCHRÖDER, Michael, 42897 Remscheid (DE); JUNGBLUTH, Heike, 41569 Rommerskirchen (DE); WITZLER, Dietrich, 41569 Rommerskirchen (DE)
(74) Vertreter: Keenway Patentanwälte Neumann Heine Taruttis
(86) Internationale Anmeldenummer: PCT/EP2018/050126
(87) Internationale Veröffentlichungsnummer: WO 2018/130445

(56) Entgegenhaltungen:
- WO-A1-2013/110633
- DE-A1-102014 000 304

## Beschreibung

Die Erfindung betrifft eine Vorrichtung zur Benetzung mehrerer Fäden gemäß dem Oberbegriff des Anspruchs 1 sowie eine Dosierpumpe insbesondere zur Verwendung in einer Vorrichtung zum Benetzen von Fäden.

Bei der Herstellung und Bearbeitung von synthetischen Fäden ist es allgemein bekannt, die Fäden mit einem Fluid zu benetzen. So wird bei der Herstellung von synthetischen Fäden nach dem Schmelzspinnen das Fluid genutzt, um den Zusammenhalt der Filamente des Fadens zu gewährleisten. In einem Texturierprozess zur Nachbehandlung der synthetischen Fäden wird das Fluid hingegen zur Kühlung eines zuvor erwärmten Fadens genutzt. Unabhängig, ob das Fluid zur Präparierung oder zur Kühlung der Fäden dient, ist es erforderlich, das Fluid mit hoher Dosiergenauigkeit kontinuierlich dem laufenden Faden zuzuführen. Zudem werden beim Schmelzspinnen und auch beim Texturieren Gruppen von Fäden parallel nebeneinander geführt und behandelt, so dass das Fluid an mehreren Benetzungsmitteln parallel in gleichen Dosiermengen zugeführt werden muss.

Eine gattungsgemäße Vorrichtung zur Benetzung mehrerer Fäden sowie eine gattungsgemäße Dosierpumpe sind beispielsweise aus der EP 1 039 011 A2 bekannt.

Bei der bekannten Vorrichtung werden die Dosierströme eines Fluids durch mehrere Fördermittel einer Dosierpumpe erzeugt. Die Fördermittel werden durch Zahnradpaarungen eines Planetenradsatzes gebildet, wobei mehrere Planetenradsätze zwischen Gehäuseplatten gehalten sind. Hierbei wird jeder Planetenradsatz aus einem Sonnenrad und mehreren Planetenrädern gebildet, wobei das Sonnenrad an einer Antriebswelle angeordnet ist und bei welcher die Planetenräder durch drehbar in den Gehäuseplatten gelagerten Achsen geführt sind. An den Gehäuseplatten sind die Pumpenauslässe ausgebildet, die jeweils mit den Auslasszonen der Planetenradsätze verbunden sind. Jedem der Pumpenauslässe ist ein Benetzungsmittel zugeordnet, die über separate Förderleitungen mit der Dosierpumpe verbunden sind. Ein Ausführungsbeispiel einer Vorrichtung zur Benetzung mehrerer Fäden sowie eine Dosierpumpe ist durch die WO 2013/110633 A1 bekannt.

Mit der bekannten Vorrichtung lässt sich somit eine Mehrzahl von Fäden parallel mit einem Fluid benetzen. Sowohl zur Präparation von Fäden als auch zur Kühlung von Fäden werden Fluide verwendet, die aus einer Öl-Wasser-Emulsion bestehen. Derartige Emulsionen besitzen jedoch den Nachteil einer begrenzten Standzeit. So können sich bei längeren Standzeiten Bakterien in dem Fluid ausbilden, die zu Ausgasungen und damit zu einer Bläschenbildung führt.

Bei der bekannten Vorrichtung zur Benetzung mehrerer Fäden wurde nun beobachtet, dass selbst die in Toträumen der Dosierpumpe gehaltenen Fluidreste derartige Ausgasungen bewirken können.

Es ist daher Aufgabe der Erfindung, die gattungsgemäße Vorrichtung zur Benetzung mehrerer Fäden sowie eine gattungsgemäße Dosierpumpe derart weiterzubilden, dass eine möglichst gleichmäßige Benetzung mit geringen Dosierströmen des Fluids parallel an einer Mehrzahl von Fäden ausführbar ist.

Diese Aufgabe wird erfindungsgemäß durch eine Vorrichtung zur Benetzung mehrerer Fäden mit den Merkmalen nach Anspruch 1 sowie mit einer Dosierpumpe mit den Merkmalen nach Anspruch 8 gelöst. Vorteilhafte Weiterbildungen der Erfindung sind durch die Merkmale und Merkmalskombinationen der jeweiligen Unteransprüche definiert.

Die Erfindung beruht auf die Erkenntnis, dass ein Totvolumen bei einer Zahnradpaarung wesentlich durch ein Kopfspiel, das sich zwischen den Zahnrädern und einer Gehäusewandung einstellt, beeinflusst wird. Um derartige Kopfspiele bei einem Planetenradsatz möglichst gering auszuführen, sind die Planetenradsätze erfindungsgemäß jeweils durch eine Zentrierplatte zwischen benachbarten Gehäuseplatten frei geführt. Somit verzichtet die Erfindung bewusst auf eine Zapfenführung der Planetenräder, die zudem zusätzliche Toträume an den Gehäuseplatten darstellen. Im Gegenteil nutzt die Erfindung eine in den Planetenrädern ausgebildete Durchlassöffnung dazu, um das Fluid der betreffenden Zahnradpaarung zuzuführen. Insoweit findet eine ständige Umspülung der Planetenräder statt, die eine Ablagerung eines Fluids in den Axialspalten des Planetenradsatzes verhindert. Die erfindungsgemäße Vorrichtung ist daher besonders geeignet, um ölhaltige Fluidemulsionen zur Benetzung mehrerer Fäden dosiert den einzelnen Fäden zuzuführen. So lassen sich vorteilhaft kleinste Mengen an Dosierströmen im Bereich von 0,05 ml/min. bis 5 ml/min. zur Benetzung eines Fadens realisieren.

Um eine Mehrzahl von Fäden gleichmäßig mit einem dosierten Fluidstrom zu benetzen, wird das Fluid an dem Planetenradsatz in gleicher Art und Weise den Zahnradpaarungen zugeführt. Hierzu ist die Weiterbildung der Erfindung bevorzugt ausgeführt, bei welcher das Kanalsystem mehrere Gehäusebohrungen in den Gehäuseplatten aufweist, die in den Durchlassöffnungen der Planetenrädern des Planetenradsatzes münden.

Bevorzugt werden mehrere Planetenradsätze parallel nebeneinander genutzt, um eine große Anzahl von Fäden gleichzeitig zu benetzen. Hierzu weisen die Gehäusebohrungen mehrere Einlassbohrungen in einer der Gehäuseplatten und mehrere axiale Verteilbohrungen in den zwischen benachbarten Planetenradsätzen angeordneten Gehäuseplatten aufweisen. So lässt sich das Fluid in axialer Richtung jedem der Planetenradsätze unmittelbar durch die Durchlassöffnungen der Planetenräder zuführen.

Die Befüllung der Einlaufzonen der Planetenradsätze wird vorteilhaft durch mehrere Verteilnuten gewährleistet, die gemäß einer vorteilhaften Weiterbildung der Erfindung an einer den Planetenrad zugewandten Seite der Gehäuseplatten ausgebildet sind. Die Verteilnuten erstrecken sich dabei jeweils zwischen einer der Durchlassöffnungen der Planetenräder und einer von mehreren Einlaufzonen der Planetenradsätze.

Damit auch geringe Mengen an Dosierströmen des Fluids kontinuierlich den Fäden zuführbar sind, ist die Weiterbildung der Erfindung bevorzugt ausgeführt, bei welcher die Planetenradsätze mit einer Antriebswelle verbunden sind und bei welcher die Antriebswelle mit einem Schrittmotor gekoppelt ist. So lassen sich auch niedrige Drehzahlen mit hoher Präzision und Gleichmäßigkeit einstellen.

Eine besonders kompakte Einheit lässt sich dadurch bilden, dass der Schrittmotor mit einem Gehäuse an der äußeren Gehäuseplatte der Dosierpumpe gehalten ist und an welcher die Antriebswelle direkt mit einem Rotor des Schrittmotors verbunden ist. So wirkt die Antriebswelle der Planetenradsätze unmittelbar als Motorwelle des Schrittmotors.

Da derartige Vorrichtung zur Benetzung mehrerer Fäden vorzugsweise für eine größere Anzahl von Fäden im Bereich von 12 bis 32 Fäden genutzt werden und somit insgesamt 12 bis 32 Förderleitungen mit den entsprechenden Anzahlen von Pumpenauslässen zu verbinden sind, ist die Weiterbildung der Erfindung besonders vorteilhaft, bei welcher die in einem der Planetenradsätze zugeordneten Pumpenauslässe in einer der Gehäuseplatten jeweils als Steckanschluss ausgebildet sind. Damit können beispielsweise Schlauchleitungen unmittelbar durch eine einfache Steckverbindung an den Pumpenauslässen gehalten werden. Aufwändige Gewindeverschlüsse, die einen hohen Montageaufwand erfordern, sind somit entbehrlich.

Die erfindungsgemäße Dosierpumpe ist somit besonders geeignet, um eine größere Mehrzahl von gleichmäßig erzeugten Dosierströmen des Fluids zu erzeugen. Die Planetenradsätze sind dabei bevorzugt mit mehreren Planetenrädern ausgeführt, um eine hohe Dichte der Pumpenauslässe pro Gehäuseplatte zu erhalten. Die Anzahl der Planetenräder pro Planetenradsatz liegt im Bereich von 2 bis 6 Planetenrädern.

Die Erfindung wird nachfolgend anhand eines Ausführungsbeispiels der erfindungsgemäßen Vorrichtung sowie der erfindungsgemäßen Dosierpumpe unter Bezug auf die beigefügten Figuren näher erläutert.

Es stellen dar:
- Fig. 1: schematisch eine Ansicht eines Ausführungsbeispiels der erfindungsgemäßen Vorrichtung zur Benetzung mehrerer Fäden
- Fig. 2: schematisch eine Längsschnittansicht der erfindungsgemäßen Dosierpumpe des Ausführungsbeispiels aus Fig. 1
- Fig. 3: schematisch eine weitere Längsschnittansicht der erfindungsgemäßen Dosierpumpe des Ausführungsbeispiels aus Fig. 1
- Fig. 4: schematisch eine Querschnittsansicht der erfindungsgemäßen Dosierpumpe des Ausführungsbeispiels aus Fig. 1
- Fig. 5: schematisch eine Querschnittsansicht eines Schrittmotors zum Antreiben einer erfindungsgemäßen Dosierpumpe
- Fig. 6: schematisch eine Längsschnittansicht eines weiteren Ausführungsbeispiels der erfindungsgemäßen Dosierpumpe
- Fig. 7: schematisch eine weitere Längsschnittansicht des Ausführungsbeispiels aus Fig.6
- Fig.8: schematisch eine Querschnittansicht des Ausführungsbeispiels aus Fig.6

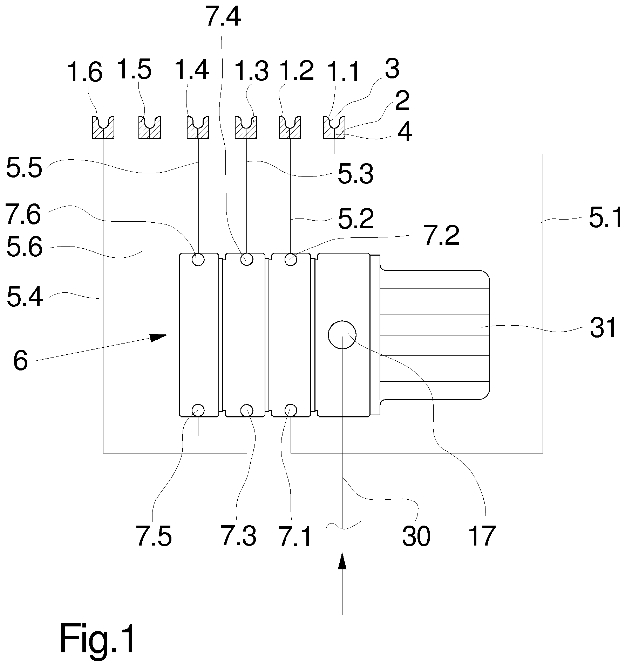

In der Fig. 1 ist ein Ausführungsbeispiel einer erfindungsgemäßen Vorrichtung zur Benetzung mehrerer Fäden schematisch dargestellt. Das Ausführungsbeispiel weist mehrere Benetzungsmittel 1.1 bis 1.6 auf. Die Anzahl der Benetzungsmittel ist beispielhaft. Grundsätzlich richtet sich die Anzahl der Benetzungsmittel nach der Anzahl der Fäden, die parallel nebeneinander als eine Gruppe gleichzeitig zu benetzen sind. Als Benetzungsmittel 1.1 bis 1.6 ist hierbei beispielhaft ein Benetzungskörper 2 gezeigt, der an einer Seite eine offene Benetzungsnut 3 aufweist. In der Benetzungsnut 3 mündet eine Dosierbohrung 4. Die Dosierbohrung 4 ist mit einer der Förderleitungen 5.1 bis 5.6 verbunden.

Das in Fig. 1 dargestellte Benetzungsmittel in Form eines Benetzungskörpers 2 ist beispielhaft. Grundsätzlich können derartige Benetzungsmittel zum Präparieren eines Fadens oder beispielsweise zur Kühlung eines Fadens genutzt werden. Je nach Anwendungsfalls sind die Benetzungsmittel entsprechend ausgeführt. So werden beispielsweise zur Kühlung von Fäden langgezogene Benetzungsnuten verwendet, denen in einem Einlaufbereich das Fluid zugeführt wird.

Jedes der Benetzungsmittel 1.1 bis 1.6 ist über eine separate Förderleitung 5.1 bis 5.6 mit einer Dosierpumpe 6 verbunden. Hierzu weist die Dosierpumpe 6 eine Mehrzahl von Fördermitteln auf, denen jeweils ein von mehreren Pumpenauslässen 7.1 bis 7.6 zugeordnet sind. An den Pumpenauslässen 7.1 bis 7.6 sind die Förderleitungen 5.1 bis 5.6 angeschlossenen.

Die Dosierpumpe 6 ist über einen Pumpeneinlass 17 und einer Zulaufleitung 30 mit einem hier nicht dargestellten Fluidspeicher verbunden, welcher ein für die Benetzung vorgesehenes Fluid vorhält. Die Dosierpumpe 6 wird über einen Elektromotor 31 angetrieben, der beispielsweise als Schrittmotor ausgeführt sein könnte.

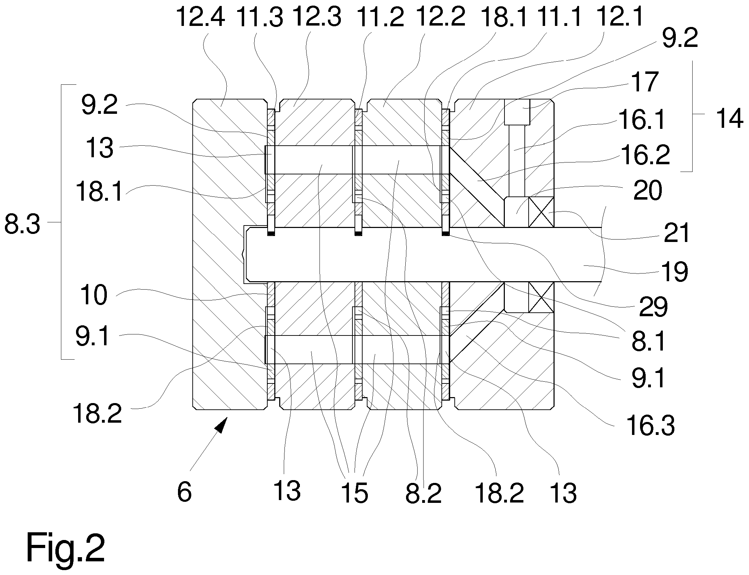

Der Aufbau der Dosierpumpe 6 sowie der Aufbau der Fördermittel wird nachfolgend unter Bezug zu den Figuren 2 bis 4 näher beschrieben.

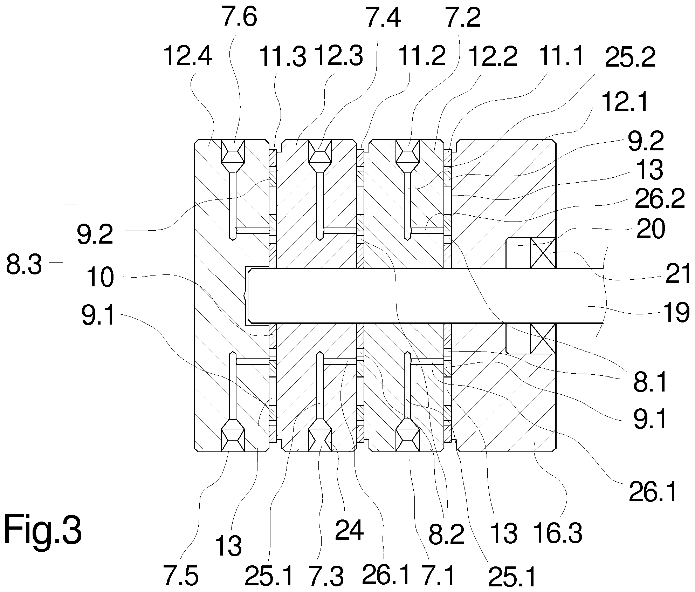

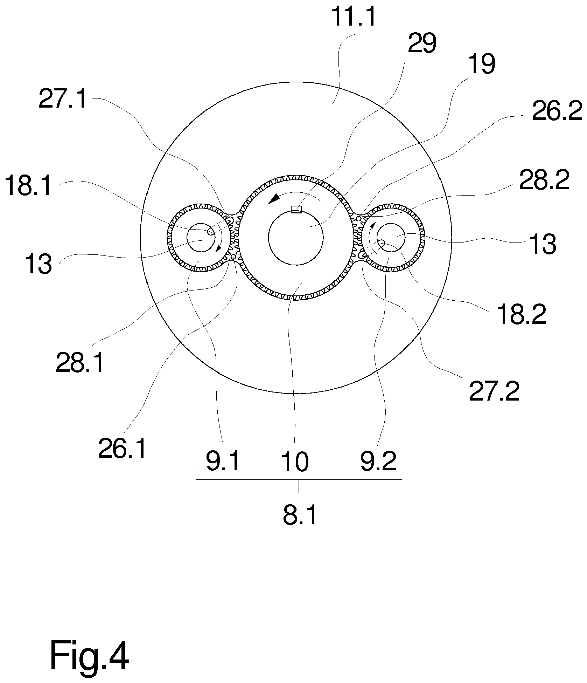

In den Fig. 2 und 3 ist jeweils eine Längsschnittansicht der Dosierpumpe 6 und in Fig. 4 ein Querschnitt der Dosierpumpe 6 gezeigt. Insoweit kein ausdrücklicher Bezug zu einer der Figuren gemacht ist, gilt die nachfolgende Beschreibung für alle Figuren.

Die Dosierpumpe 6 besteht aus mehreren Gehäuseplatten 12.1 bis 12.4, die in diesem Fall einen kreisförmigen Querschnitt aufweisen. Die Gehäuseplatten 12.1 bis 12.4 schließen zwischen sich mehrere Planetenradsätze 8.1 bis 8.3 ein, die jeweils innerhalb einer Zentrierplatte 11.1 bis 11.3 umschlossen sind. Die Gehäuseplatten 12.1 bis 12.4 und die dazwischen liegenden Zentrierplatten 11.1 bis 11.3 sind druckdicht zusammengehalten.

Jedes der Planetenradsätze 8.1 bis 8.3 bildet mehrere Fördermittel, die nachfolgend anhand der Darstellung in Fig. 4 näher beschrieben werden.

Wie aus der Darstellung in Fig. 4 hervorgeht, weist eines der Planetenradsätze, in diesem Fall der Planetenradsatz 8.1 zwei äußere Planetenräder 9.1 und 9.2 sowie ein im Zentrum angeordnetes Sonnenrad 10 auf. Das Sonnenrad 10 ist über eine Wellennabenverbindung 29 am Umfang einer Antriebswelle 19 gehalten. Die Planetenräder 9.1 und 9.2 sind gegenüberliegend zu beiden Seiten des Sonnrades 10 angeordnet und stehen mit dem Sonnenrad 10 im Eingriff. Die Planetenräder 9.1 und 9.2 werden hierzu in der Zentrierplatte 11.1 frei geführt. Im Bereich kurz vor und kurz hinter den Zahneingriffen der Planetenräder 9.1 und 9.2 mit dem Sonnenrad 10 weist die Zentrierplatte 11.1 jeweils einen Freiraum auf, die als Einlaufzone und als Auslaufzone wirken. Für den Fall, dass das Sonnenrad 10 entgegengesetzt zum Uhrzeigersinn angetrieben wird, bildet sich im oberen Bereich zwischen dem Planetenrad 9.1 und dem Sonnenrad 10 eine erste Einlaufzone 27.1 aus. Auf der zum Zahneingriff gegenüberliegenden Seite ist die Auslaufzone 28.1 ausgebildet. Die Einlaufzone wird in der Fachwelt auch als Saugraum und die Auslaufzone als Druckraum bezeichnet. Auf der gegenüberliegenden Seite ist eine zweite Einlaufzone 27.2 unterhalb des Zahneingriffes zwischen dem Planetenrad 9.2 und dem Sonnenrad 10 ausgeführt. Demgegenüber auf der oberen Seite des Zahneingriffes befindet sich die Auslaufzone 28.2.

Der in Fig. 4 dargestellte Planetenradsatz 8.1 bildet somit zwei Fördermittel, die zwei separate Dosierströme des Fluids erzeugen. Die Anzahl der Planetenräder 9.1 und 9.2 ist beispielhaft. So könnte am Sonnenrad 10 auch mehr als zwei Planetenräder zugeordnet werden.

Wie aus der Darstellung in Fig. 4 weiter hervorgeht, sind den Einlaufzonen 27.1 und 27.2 jeweils eine Verteilnut 18.1 und 18.2 zugeordnet, die an einer Seite der Gehäuseplatte 12.2 ausgebildet sind. Die Verteilnuten 18.1 und 18.2 erstrecken sich hierbei von den Einlaufzonen 27.1 und 27.2 jeweils zu einer Durchlassöffnung 13, die in den Planetenrädern 9.1 und 9.2 eingebracht ist.

Zur weiteren Erläuterung der Befüllung der Einlaufzonen 27.1 und 27.2 wird nachfolgend Bezug zu der Fig. 2 genommen.

Wie aus der Darstellung in Fig. 2 hervorgeht, weisen alle Planetenräder 9.1 und 9.2 der Planetenradsätze 8.1 bis 8.3 jeweils eine Durchlassöffnung 13 auf. Die Durchlassöffnungen 13 sind bevorzugt im mittleren Bereich der Planetenräder 9.1 und 9.2 ausgebildet. Die Durchlassöffnungen 13 sind über ein Kanalsystem 14 mit einem Pumpeneinlass 17 verbunden. In diesem Fall wird das Kanalsystem 14 durch mehrere Gehäusebohrungen in den Gehäuseplatten 12.1, 12.2 und 12.3 gebildet. Hierzu sind mehrere axial verlaufende Verteilbohrungen 15 ausgeführt, die die Gehäuseplatten 12.2 und 12.3 durchdringen und die Durchlassöffnungen 13 der Planetenräder 9.1 bzw. 9.2 in den Planetenradsätzen 8.1 bis 8.3 miteinander verbinden.

An der äußeren Gehäuseplatte 12.1, die von der Antriebswelle 19 durchdrungen wird, ist der Pumpeneinlass 17 ausgebildet. Der Pumpeneinlass 17 ist über einen Einlasskanal 16.1 mit einer Einlasskammer 20 im Innern der Gehäuseplatte 12.1 verbunden. Die Einlasskammer 20 ist konzentrisch zu der Antriebswelle 19 ausgeführt und wird nach außen hin durch eine Dichtung 21 abgedichtet. Die Einlasskammer 20 ist durch zwei als Gehäusebohrungen schräg angeordnete Einlassbohrungen 16.2 und 16.3 mit den Durchlassöffnungen 13 in den Planetenrädern 9.1 und 9.2 des ersten Planetenradsatzes 8.1 verbunden. Somit lässt sich ein über den Pumpeneinlass 17 zugeführtes Fluid den Durchlassöffnungen 13 in den Planetenrädern aller Planetenradsätze 8.1 bis 8.3 zuführen.

Wie bereits anhand der Fig. 4 gezeigt und beschrieben, weisen die Gehäuseplatten 12.3 und 12.4 an den zu den Planetenradsätzen 8.2 und 8.3 gewandten Seite ebenfalls mehrere Verteilnuten 18.1 und 18.2 auf, um die Durchlassöffnungen 13 der Planetenräder 9.1 und 9.2 mit den Einlaufzonen 27.1 und 27.2 der Planetenradsätze 8.2 und 8.3 zu verbinden.

Wie aus der Darstellung in Fig. 4 hervorgeht, sind die Auslaufzonen 28.1 und 28.2 des Planetenradsatzes 8.1 über jeweils eine axiale Auslassbohrung 26.1 und 26.2 in der Gehäuseplatte 12.2 mit jeweils einem Pumpenauslass verbunden.

Wie aus der Darstellung in Fig. 3 hervorgeht, münden die axialen Auslassbohrungen 26.1 und 26.2 jeweils in eine Radialauslassbohrung 25.1 und 25.2 der Gehäuseplatte 12.2. Die radialen Auslassbohrungen 25.1 und 25.2 verbinden den am Umfang der Gehäuseplatte 12.2 ausgebildeten Pumpenauslässen 7.1 und 7.2. In diesem Ausführungsbeispiel weisen die Pumpenauslässe 7.1 und 7.2 jeweils eine Steckverbindung 24 auf, die eine direkte Anbindung eines Leitungsendes der Förderleitung ermöglicht.

An dieser Stelle sei jedoch ausdrücklich erwähnt, dass die Pumpenauslässe 7.1 bis 7.6 auch mit einem Gewinde ausgeführt sein könnten.

Die in den Gehäuseplatten 12.3 und 12.4 ausgebildeten Pumpenauslässe 7.3 bis 7.6 sind in gleicher Art und Weise über jeweils eine Radialauslassbohrung 25.1 und 25.2 und eine Axialauslassbohrung 26.1 und 26.2 mit den Auslaufzonen 28.1 und 28.2 der Planetenradsätze 8.2 und 8.3 verbunden.

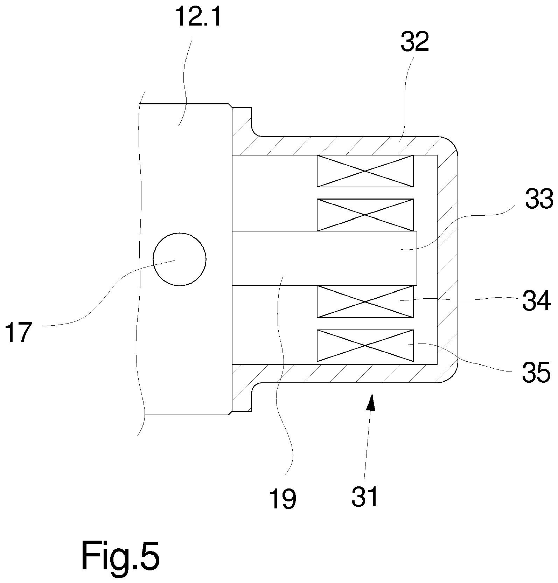

Die zum Antreiben der Planetenradsätze 8.1 und 8.3 vorgesehen Antriebswelle 19 durchdringt die Gehäuseplatten 12.1, 12.2 und 12.3 und ist mit einem Ende der Gehäuseplatte 12.4 drehbar gelagert. Mit einem hier nicht näher dargestellten Antriebsende ist die Antriebswelle 19 mit einem Elektromotor verbunden. In der Fig. 5 ist eine mögliche Ausführungsform zum Antrieb der Antriebswelle 19 dargestellt.

In Fig. 5 ist schematisch eine Querschnittsansicht eines Elektromotors gezeigt, der in diesem Ausführungsbeispiel ein Schrittmotor sein könnte. Der Elektromotor 31 weist ein Motorgehäuse 32 auf, das unmittelbar an der Gehäuseplatte 12.1 gehalten ist. Die Antriebswelle 19 ragt mit einem freien Antriebsende 33 ins Innere des Elektromotors 31. Am Umfang des Antriebsendes 33 ist ein Rotor 34 angeordnet, der mit einem Stator 35 zusammenwirkt. So lässt sich die Antriebswelle 19 direkt über den Elektromotor 31 antreiben.

Bei der in Fig. 1 dargestellten erfindungsgemäßen Vorrichtung zum Benetzen mehrerer Fäden wird die Dosierpumpe 6 durch den Elektromotor 31 mit einer vorbestimmten Drehzahl angetrieben. Hierbei wird über den Pumpeneinlass 17 und der Zulaufleitung 30 ein Fluid durch die Planetenradsätze 8.1 bis 8.3 angesaugt und den jeweiligen Einlaufzonen 27.1 und 27.2 zugeführt. Das Fluid gelangt hierbei jeweils in die Durchlassöffnungen 13 der Planetenräder 9.1 und 9.2 und durchströmt die Axialspalte gleichmäßig. Durch die Drehung der Sonnenräder 10 werden die im Eingriff befindlichen Planetenräder 9.1 und 9.2 angetrieben, so dass das Fluid aus der Einlaufzone in die Auslaufzone gefördert wird. Der dosierte Fluidstrom gelangt dann über die Pumpenauslässe 7.1 bis 7.6 in die Förderleitungen 5.1 bis 5.6 und wird den Benetzungsmitteln 1.1 bis 1.6 zugeführt. Durch die in den Zentrierplatten 11.1 bis 11.3 frei geführten Planetenräder 9.1 und 9.2 der Planetenradsätze 8.1 bis 8.3 werden sehr geringe Kopfspiele und damit sehr geringe Toträume realisiert. Zudem ist eine kontinuierliche Durchspülung der Axialspalte bei den Planetenradsätzen 8.1 bis 8.3 gewährleistet, so dass ein kontinuierlicher Fluidfluss innerhalb der Pumpe stattfindet. Die erfindungsgemäße Vorrichtung ermöglicht somit einen kontinuierlichen Betrieb mit im Wesentlichen gleichmäßigen dosierten Fluidströmen um die Fäden zu benetzen. Insoweit können hohe Dosiergenauigkeiten über eine lange Standzeit gewährleistet werden.

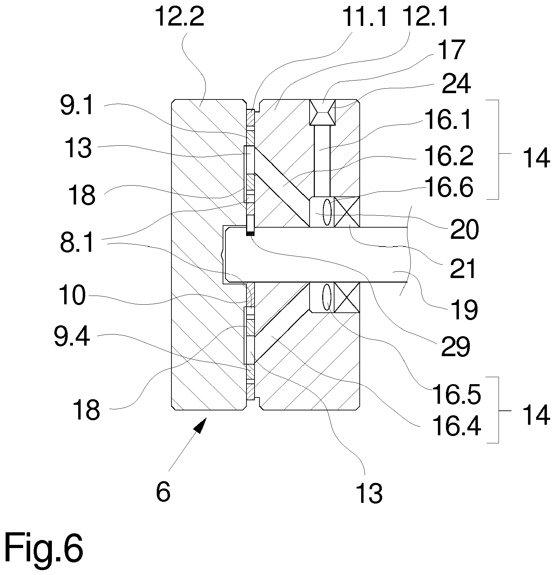

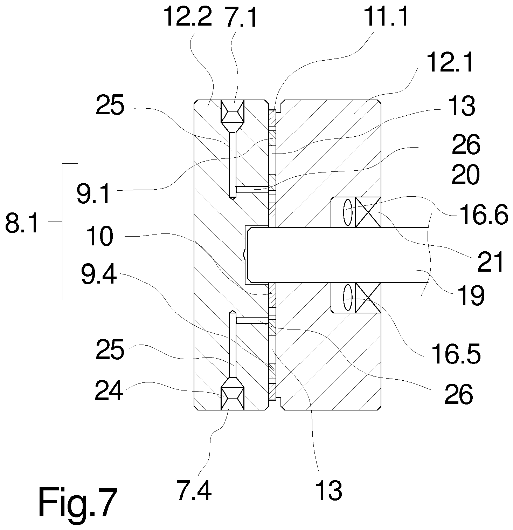

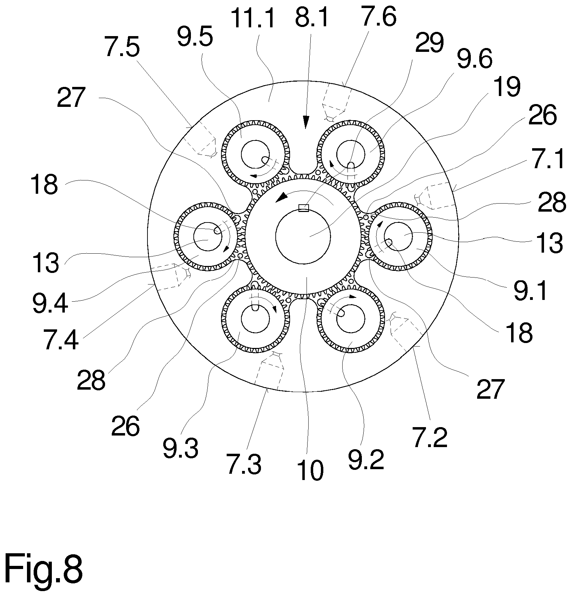

Die erfindungsgemäße Vorrichtung gemäß dem Ausführungsbeispiel nach Fig. 1 wird mit einer Dosierpumpe betrieben, die mehrere Planetenradsätze zur Bildung der Fördermittel aufweist. Hierbei besteht jeder der Planetenradsätze aus zwei Planetenrädern und einem Sonnenrad. Diese Ausbildung ist beispielhaft. So könnte bereits ein Planetenradsatz mit mehreren Planetenrädern genutzt werden, um die Benetzungsmittel der erfindungsgemäßen Vorrichtung gemäß Fig. 1 mit einem Fluid zu versorgen. Ein derartiges Ausführungsbeispiel einer Dosierpumpe 6 ist in den Fig. 6, 7 und 8 in mehreren Ansichten dargestellt. Die Fig. 6 und 7 zeigen jeweils eine Längsschnittansicht und Fig. 8 eine Querschnittsansicht der Dosierpumpe 6. Insoweit kein ausdrücklicher Bezug zu einer der Figuren gemacht ist, gilt die nachfolgende Beschreibung für alle Figuren.

Das Ausführungsbeispiel der Dosierpumpe 6 nach den Fig. 6 bis 8 besteht aus den Gehäuseplatten 12.1 und 12.2, die in diesem Beispiel ebenfalls einen kreisförmigen Querschnitt aufweisen. An dieser Stelle sei jedoch erwähnt, dass die Außenkontur der Gehäuseplatten 12.1 und 12.2 eine beliebige Gestalt beispielsweise auch eine eckige Form aufweisen kann. Die Gehäuseplatten 12.1 und 12.2 schließen zwischen sich ein Planetenradsatz 8.1 ein, das innerhalb einer Zentrierplatte 11.1 umschlossen ist. Die Gehäuseplatten 12.1 und 12.2 und die dazwischenliegende Zentrierplatte 11.1 sind druckdicht zusammengehalten.

Wie aus der Darstellung in Fig. 8 hervorgeht, weist der Planetenradsatz 8.1 in diesem Ausführungsbeispiel sechs äußere Planetenräder 9.1 bis 9.6 sowie ein im Zentrum angeordnetes Sonnenrad 10 auf. Das Sonnenrad 10 ist über eine Wellennabenverbindung 29 am Umfang einer Antriebswelle 19 gehalten. Die Planetenräder 9.1 bis 9.6 sind gleichmäßig über den Umfang des Sonnenrades 10 verteilt angeordnet und stehen mit dem Sonnenrad 10 im Eingriff. Die Planetenräder 9.1 bis 9.6 werden hierzu in der Zentrierplatte 11.1 frei geführt. Somit bildet der Planetenradsatz 8.1 insgesamt sechs Fördermittel, um an den Pumpenauslässen 7.1 bis 7.6 sechs separate Dosierströme eines Fluids zum Benetzen von Fäden zu erzeugen. So könnte dieses Ausführungsbeispiel der Dosierpumpe in der Fig. 1 dargestellten Ausführung der erfindungsgemäßen Vorrichtung unmittelbar genutzt werden, um die insgesamt sechs Benetzungsmittel zu versorgen. Die Funktionsweise der Radsätze des Planetenrades 8.1 ist hierbei identisch zu dem Ausführungsbeispiel nach Fig. 4, so dass an dieser Stelle zu der vorgenannten Beschreibung Bezug genommen wird. Jedem der Zahnradpaarungen zwischen den Planetenrädern 9.1 bis 9.6 und dem Sonnenrad 10 ist somit eine Einlaufzone 27 und eine Auslaufzone 28 zugeordnet. Die den Planetenrädern 9.1 bis 9.6 zugeordneten Einlaufzonen 27 sind jeweils über eine Verteilnut 18 mit einer Durchlassöffnung 13 in einem der Planetenräder 9.1 bis 9.6 verbunden.

Jedes der Planetenräder 9.1 bis 9.6 weist somit eine separate Durchlassöffnung 13 auf, die gemeinsam über ein Kanalsystem 14 mit einem Pumpeneinlass 17 verbunden sind, wie aus der Darstellung in Fig. 6 hervorgeht. In diesem Fall wird das Kanalsystem 14 durch mehrere Gehäusebohrungen gebildet, die sich als Einlassbohrungen 16.2 bis 16.7 die Gehäuseplatte 12.1 von einer mittleren Einlasskammer 20 bis zu der den Planetenradsatz 8.1 zugewandten Seitenwand erstrecken. Die Einlassbohrungen 16.2 bis 16.7 münden jeweils in eine der Durchlassöffnungen 13 in den Planetenrädern 9.1 bis 9.6. Der Pumpeneinlass 17 ist über einen Einlasskanal 16.1 mit der Einlasskammer 20 verbunden. In diesem Ausführungsbeispiel ist der Pumpeneinlass 17 mit einer Steckverbindung 24 ausgeführt, so dass eine direkte Anbindung eines Leitungsendes der Zulaufleitung möglich ist.

An der äußeren Gehäuseplatte 12.1, die von der Antriebswelle 19 durchdrungen wird, ist der Pumpeneinlass 17 ausgebildet. Die Antriebswelle 19 sowie die Einlasskammer 20 ist in der Gehäuseplatte 12.1 durch eine Dichtung 21 nach außen hin abgedichtet.

Wie bereits aus der Darstellung in Fig. 8 hervorgeht, sind die Auslasszonen 28 des Planetenradsatzes 8.1 über jeweils eine axiale Auslassbohrung 26 in der Gehäuseplatte 12.2 mit einem der Pumpenauslässe 7.1 bis 7.6 verbunden.

Wie aus der Darstellung in Fig. 7 hervorgeht, münden die axialen Auslassbohrungen 26 jeweils in eine Radialauslassbohrung 25 der Gehäuseplatte 12.2. Die radialen Auslassbohrungen 25 verbinden den am Umfang der Gehäuseplatte 12.2 ausgebildeten Pumpenauslässen 7 mit den jeweiligen Auslaufzonen des betreffenden Zahnradpaares. Somit weist dieses Ausführungsbeispiel insgesamt sechs Pumpenauslässe auf, wobei in Fig. 7 nur die Pumpenauslässe 7.1 und 7.4 dargestellt sind. In diesem Ausführungsbeispiel weisen die Pumpenauslässe 7.1 und 7.4 ebenfalls jeweils eine Steckverbindung 24 auf, die eine direkte Anbindung eines Leitungsendes der Förderleitung ermöglicht.

Wie aus den Darstellungen in Fig. 6 und 7 hervorgeht, ist die Antriebswelle 19 mit einem Ende in der Gehäuseplatte 12.2 gelagert. Mit einem hier nicht dargestellten gegenüberliegenden Ende ist die Antriebswelle 19 mit einem Antrieb gekoppelt. Die Verbindung zwischen dem Sonnenrad 10 des Planetenradsatzes 8.1 und der Antriebswelle 19 ist in diesem Ausführungsbeispiel durch eine Wellennabenverbindung 29 ausgeführt.

In Betrieb lassen sich somit insgesamt sechs Fördermittel bilden, die sechs gleichmäßig dosierte Fluidströme erzeugt und über die Pumpenauslässe 7.1 bis 7.6 abgibt. Insoweit ist das Ausführungsbeispiel der Dosierpumpe auch mit nur einem Planetenradsatz 8.1 geeignet, um die in Fig. 1 dargestellte Vorrichtung auszuführen.

An dieser Stelle wird darauf hingewiesen, dass die Ausbildung der Gehäusebohrungen in den dargestellten Ausführungsbeispielen der erfindungsgemäßen Dosierpumpe beispielhaft sind. Wesentlich hierbei ist, dass der Pumpeneinlass mit den Durchlassöffnungen in den Planetenrädern verbunden ist. Hierbei können auch mehrere Pumpeneinlässe verwendet werden, um die konstruktive Ausbildung des Kanalsystems zu verändern. Um eine möglichst störungsfreie Benetzung ohne Ausgasungen zu erhalten, ist die Zuführung des Fluids über die Planetenräder besonders vorteilhaft. So wird eine gleichmäßige Umspülung der Planetenräder erreicht, die mit minimalen Totvolumen in dem Planetenradsatz integriert sind.

## Patentansprüche

1. Vorrichtung zur Benetzung mehrerer Fäden mit einem Fluid mit mehreren den Fäden zugeordneten Benetzungsmitteln (1.1 - 1.6) und mit einer Dosierpumpe (6), die durch mehrere Förderleitungen (5.1 - 5.6) mit den Benetzungsmitteln (1.1 - 1.6) verbunden ist, wobei die Dosierpumpe (6) mehrere Fördermittel (8.1) zur Erzeugung mehrerer Dosierströme des Fluids und mehrere Pumpenauslässe (7.1 - 7.6) aufweist, an denen die Förderleitungen (5.1 - 5.6) angeschlossen sind, und wobei die Fördermittel durch zumindest einen zwischen Gehäuseplatten (12.1, 12.2) angeordnete Planetenradsatz (8.1) gebildet sind, **dadurch gekennzeichnet, dass** mehrere Planetenräder (9.1 - 9.6) des Planetenradsatzes (8.1) durch eine Zentrierplatte (11.1) zwischen benachbarten Gehäuseplatten (12.1, 12.2) frei geführt sind, dass die Planetenräder (9.1 - 9.6) des Planetenradsatzes (8.1 - 8.3) jeweils eine Durchlassöffnung (13) aufweisen und dass die Durchlassöffnungen (13) der Planetenräder (9.1, 9.2) durch ein Kanalsystem (14) mit zumindest einem Pumpeneinlass (17) verbunden sind.

2. Vorrichtung nach Anspruch 1, **dadurch gekennzeichnet, dass** das Kanalsysteme (14) mehrere Gehäusebohrungen (15, 16.2, 16.3) in den Gehäuseplatten (12.1, 12.2, 12.3) aufweist, die in den Durchlassöffnungen (13) der Planetenräder (9.1, 9.2) des Planetenradsatzes (8.1 - 8.3) münden.

3. Vorrichtung nach Anspruch 2, **dadurch gekennzeichnet, dass** mehrere Planetenradsätze (8.1 -8.3) zwischen den Gehäuseplatten (12.1 - 12.4) gehalten sind und dass die Gehäusebohrungen mehrere Einlassbohrungen (16.2, 16.3) in einer der Gehäuseplatten (12.1 - 12.4) und mehrere axiale Verteilbohrungen (15 ) in den zwischen benachbarten Planetenradsätzen (8.1 - 8.3) angeordneten Gehäuseplatten (12.1 - 12.4) aufweisen.

4. Vorrichtung nach einem der Ansprüche 1 bis 3, **dadurch gekennzeichnet, dass** die Gehäuseplatten (12.1 - 12.4) an einer dem Planetenradsatz (8.1 - 8.3) zugewandten Seite mehrere Verteilnuten (18.1, 18.2) aufweisen, die sich jeweils zwischen einer der Durchlassöffnungen (13) und einer von mehreren Einlaufzonen (27.1, 27.2) der Planetenradsätze (8.1 - 8.3) erstreckt.

5. Vorrichtung nach einem der Ansprüche 1 bis 4, **dadurch gekennzeichnet, dass** die Planetenradsätze (8.1 - 8.3) mit einer Antriebswelle (19) verbunden sind und dass die Antriebswelle (19) mit einem Schrittmotor (31) gekoppelt ist.

6. Vorrichtung nach Anspruch 5, **dadurch gekennzeichnet, dass** der Schrittmotor (31) mit einem Gehäuse (32) an der äußeren Gehäuseplatte (12.1) gehalten ist und dass die Antriebswelle (19) direkt mit einem Rotor (34) des Schrittmotors (31) verbunden ist.

7. Vorrichtung nach einem der Ansprüche 1 bis 6, **dadurch gekennzeichnet, dass** die einem der Planetenradsätze (8.1 - 8.3) zugeordneten Pumpenauslässe (7.1 - 7.6) in einer der Gehäuseplatten (12.2 - 12.4) jeweils als ein Steckanschluss (24) ausgebildet sind.

8. Dosierpumpe, insbesondere zur Verwendung in einer Vorrichtung zum Benetzen von Fäden , mit mehreren Fördermitteln (8.1), denen separate Pumpenauslässe (7.1 - 7.6) zugeordnet sind, wobei die Fördermittel (8.1) durch zumindest einen zwischen Gehäuseplatten (12.1, 12.2) angeordneter Planetenradsatz (8.1) gebildet sind, **dadurch gekennzeichnet, dass** mehrere Planetenräder (9.1- 9.6) des Planetenradsatzes (8.1) durch eine Zentrierplatte (11.1) zwischen benachbarten Gehäuseplatten (12.1,12.2) geführt sind, wobei die Planetenräder (9.1- 9.6) des Planetenradsatzes (8.1) jeweils eine Durchlassöffnung (13) aufweisen und wobei die Durchlassöffnungen (13) der Planetenräder (9.1- 9.6) durch ein Kanalsystem (14) mit zumindest einem Pumpeneinlass (17) verbunden sind.

9. Dosierpumpe nach Anspruch 8, **dadurch gekennzeichnet, dass** das Kanalsysteme (14) mehrere Gehäusebohrungen (15, 16.2, 16.3) in den Gehäuseplatten (12.1, 12.2, 12.3) aufweist, die in den Durchlassöffnungen (13) der Planetenräder (9.1, 9.2) des Planetenradsatzes (8.1 - 8.3) münden.

10. Dosierpumpe nach Anspruch 9, **dadurch gekennzeichnet, dass** mehrere Planetenradsätze (8.1 -8.3) zwischen den Gehäuseplatten (12.1 - 12.4) gehalten sind und dass die Gehäusebohrungen mehrere Einlassbohrungen (16.2, 16.3) in einer der Gehäuseplatten (12.1 - 12.4) und mehrere axiale Verteilbohrungen (15) in den zwischen benachbarten Planetenradsätzen (8.1 - 8.3) angeordneten Gehäuseplatten (12.1 - 12.4) aufweisen.

11. Dosierpumpe nach einem der Ansprüche 8 bis 10, **dadurch gekennzeichnet, dass** die Gehäuseplatten (12.2 - 12.4) an einer dem Planetenradsatz (8.1 - 8.3) zugewandten Seite mehrere Verteilnuten (18.1, 18.2) aufweisen, die sich jeweils zwischen einer der Durchlassöffnungen (13) und einer von mehreren Einlaufzonen (27.1, 27.2) der Planetenradsätze (8.1 - 8.3) erstreckt.

12. Dosierpumpe nach einem der Ansprüche 8 bis 11, **dadurch gekennzeichnet, dass** die Planetenradsätze (8.1 - 8.3) mit einer Antriebswelle (19) verbunden sind und dass die Antriebswelle (19) mit einem Schrittmotor (31) gekoppelt ist.

13. Dosierpumpe nach Anspruch 12, **dadurch gekennzeichnet, dass** der Schrittmotor (31) mit einem Gehäuse (32) an der äußeren Gehäuseplatte (12.1) gehalten ist und dass die Antriebswelle (19) direkt mit einem Rotor (34) des Schrittmotors (31) verbunden ist.

14. Dosierpumpe nach einem der Ansprüche 8 bis 13, **dadurch gekennzeichnet, dass** die einem der Planetenradsätze (8.1 - 8.3) zugeordneten Pumpenauslässe (7.1 - 7.6) in einer der Gehäuseplatten (12.2 - 12.4) jeweils als ein Steckanschluss (24) ausgebildet sind.

## Claims

1. Device for wetting multiple threads with a fluid, having multiple wetting means (1.1 - 1.6) assigned to the threads and having a dosing pump (6) which is connected to the wetting means (1.1 - 1.6) by multiple conveying lines (5.1 - 5.6), wherein the dosing pump (6) has multiple conveying means (8.1) for generating multiple dosing flows of the fluid and has multiple pump outlets (7.1 - 7.6), to which the conveying lines (5.1 - 5.6) are connected, and wherein the conveying means are formed by at least one planetary gear set (8.1) arranged between housing plates (12.1, 12.2), **characterized in that** multiple planet gears (9.1 - 9.6) of the planetary gear set (8.1) are guided freely by a centering plate (11.1) between adjacent housing plates (12.1, 12.2), **in that** the planet gears (9.1 - 9.6) of the planetary gear set (8.1 - 8.3) have in each case one passage opening (13), and **in that** the passage openings (13) of the planet gears (9.1, 9.2) are connected by a channel system (14) to at least one pump inlet (17).

2. Device according to Claim 1, **characterized in that** the channel system (14) has multiple housing bores (15, 16.2, 16.3) in the housing plates (12.1, 12.2, 12.3), which housing bores open into the passage openings (13) of the planet gears (9.1, 9.2) of the planetary gear set (8.1 - 8.3).

3. Device according to Claim 2, **characterized in that** multiple planetary gear sets (8.1 - 8.3) are held between the housing plates (12.1 - 12.4), and **in that** the housing bores have multiple inlet bores (16.2, 16.3) in one of the housing plates (12.1 - 12.4) and multiple axial distribution bores (15) in the housing plates (12.1 - 12.4) arranged between adjacent planetary gear sets (8.1 - 8.3).

4. Device according to any of Claims 1 to 3, **characterized in that** the housing plates (12.1 - 12.4) have, on a side facing toward the planetary gear set (8.1 - 8.3), multiple distribution grooves (18.1, 18.2) which extend in each case between one of the passage openings (13) and one of multiple run-in zones (27.1, 27.2) of the planetary gear sets (8.1 - 8.3).

5. Device according to any of Claims 1 to 4, **characterized in that** the planetary gear sets (8.1 - 8.3) are connected to a drive shaft (19), and **in that** the drive shaft (19) is coupled to a stepper motor (31).

6. Device according to Claim 5, **characterized in that** the stepper motor (31) is held with a housing (32) on the outer housing plate (12.1), and **in that** the drive shaft (19) is connected directly to a rotor (34) of the stepper motor (31).

7. Device according to any of Claims 1 to 6, **characterized in that** the pump outlets (7.1 - 7.6), assigned to one of the planetary gear sets (8.1 - 8.3), in one of the housing plates (12.2 - 12.4) are formed in each case as a plug-in connector (24).

8. Dosing pump, in particular for use in a device for wetting threads, having multiple conveying means (8.1) which are assigned separate pump outlets (7.1 - 7.6), wherein the conveying means (8.1) are formed by at least one planetary gear set (8.1) arranged between housing plates (12.1, 12.2), **characterized in that** multiple planet gears (9.1 - 9.6) of the planetary gear set (8.1) are guided by a centering plate (11.1) between adjacent housing plates (12.1, 12.2), wherein the planet gears (9.1 - 9.6) of the planetary gear set (8.1) have in each case one passage opening (13), and wherein the passage openings (13) of the planet gears (9.1 - 9.6) are connected by a channel system (14) to at least one pump inlet (17).

9. Dosing pump according to Claim 8, **characterized in that** the channel system (14) has multiple housing bores (15, 16.2, 16.3) in the housing plates (12.1, 12.2, 12.3), which housing bores open into the passage openings (13) of the planet gears (9.1, 9.2) of the planetary gear set (8.1 - 8.3).

10. Dosing pump according to Claim 9, **characterized in that** multiple planetary gear sets (8.1 - 8.3) are held between the housing plates (12.1 - 12.4), and **in that** the housing bores have multiple inlet bores (16.2, 16.3) in one of the housing plates (12.1 - 12.4) and multiple axial distribution bores (15) in the housing plates (12.1 - 12.4) arranged between adjacent planetary gear sets (8.1 - 8.3).

11. Dosing pump according to any of Claims 8 to 10, **characterized in that** the housing plates (12.2 - 12.4) have, on a side facing toward the planetary gear set (8.1 - 8.3), multiple distribution grooves (18.1, 18.2) which extend in each case between one of the passage openings (13) and one of multiple run-in zones (27.1, 27.2) of the planetary gear sets (8.1 - 8.3).

12. Dosing pump according to any of Claims 8 to 11, **characterized in that** the planetary gear sets (8.1 - 8.3) are connected to a drive shaft (19), and **in that** the drive shaft (19) is coupled to a stepper motor (31).

13. Dosing pump according to Claim 12, **characterized in that** the stepper motor (31) is held with a housing (32) on the outer housing plate (12.1), and **in that** the drive shaft (19) is connected directly to a rotor (34) of the stepper motor (31).

14. Dosing pump according to any of Claims 8 to 13, **characterized in that** the pump outlets (7.1 - 7.6), assigned to one of the planetary gear sets (8.1 - 8.3), in one of the housing plates (12.2 - 12.4) are formed in each case as a plug-in connector (24).

## Revendications

1. Dispositif de mouillage de plusieurs fils avec un fluide à l'aide de plusieurs moyens de mouillage (1.1 - 1.6) associés aux fils et à l'aide d'une pompe de dosage (6) qui est reliée par le biais de plusieurs conduites de refoulement (5.1 - 5.6) aux moyens de mouillage (1.1 - 1.6), la pompe de dosage (6) présentant plusieurs moyens de refoulement (8.1) pour produire plusieurs flux de dosage du fluide et plusieurs sorties de pompe (7.1 - 7.6) auxquelles les conduites de refoulement (5.1 - 5.6) sont raccordées, et les moyens de refoulement étant formés par au moins un train planétaire (8.1) disposé entre des plaques de carter (12.1, 12.2), **caractérisé en ce que** plusieurs pignons satellites (9.1 - 9.6) du train planétaire (8.1) sont guidés librement par le biais d'une plaque de centrage (11.1) entre des plaques de carter (12.1, 12.2) adjacentes, **en ce que** les pignons satellites (9.1 - 9.6) du train planétaire (8.1 - 8.3) présentent respectivement une ouverture de passage (13) et **en ce que** les ouvertures de passage (13) des pignons satellites (9.1, 9.2) sont reliées par le biais d'un système de canaux (14) à au moins une entrée de pompe (17).

2. Dispositif selon la revendication 1, **caractérisé en ce que** le système de canaux (14) présente plusieurs alésages de carter (15, 16.2, 16.3) dans les plaques de carter (12.1, 12.2, 12.3), lesquels alésages débouchent dans les ouvertures de passage (13) des pignons satellites (9.1, 9.2) du train planétaire (8.1 - 8.3).

3. Dispositif selon la revendication 2, **caractérisé en ce que** plusieurs trains planétaires (8.1 -8.3) sont retenus entre les plaques de carter (12.1 - 12.4) et **en ce que** les alésages de carter présentent plusieurs alésages d'entrée (16.2, 16.3) dans l'une des plaques de carter (12.1 - 12.4) et plusieurs alésages de distribution axiaux (15) dans les plaques de carter (12.1 - 12.4) disposées entre des trains planétaires (8.1 - 8.3) adjacents.

4. Dispositif selon l'une des revendications 1 à 3, **caractérisé en ce que** les plaques de carter (12.1 - 12.4) présentent plusieurs rainures de distribution (18.1 - 18.2) sur un côté tourné vers le train planétaire (8.1 - 8.3), lesquelles rainures s'étendent respectivement entre l'une des ouvertures de passage (13) et l'une parmi plusieurs zones d'entrée (27.1, 27.2) des trains planétaires (8.1 - 8.3).

5. Dispositif selon l'une des revendications 1 à 4, **caractérisé en ce que** les trains planétaires (8.1 - 8.3) sont reliés à un arbre d'entraînement (19) et **en ce que** l'arbre d'entraînement (19) est accouplé à un moteur pas à pas (31).

6. Dispositif selon la revendication 5, **caractérisé en ce que** le moteur pas à pas (31) est retenu à l'aide d'un carter (32) sur la plaque de carter extérieure (12.1) et **en ce que** l'arbre d'entraînement (19) est relié directement à un rotor (34) du moteur pas à pas (31).

7. Dispositif selon l'une des revendications 1 à 6, **caractérisé en ce que** les sorties de pompe (7.1 - 7.6) associées à l'un des trains planétaires (8.1 - 8.3) dans l'une des plaques de carter (12.2 - 12.4) sont formées respectivement sous la forme d'un raccord enfichable (24).

8. Pompe de dosage, en particulier destinée à être utilisée dans un dispositif de mouillage de fils à l'aide de plusieurs moyens de refoulement (8.1) auxquels des sorties de pompe (7.1 - 7.6) séparées sont associées, les moyens de refoulement (8.1) étant formés par au moins un train planétaire (8.1) disposé entre des plaques de carter (12.1, 12.2), **caractérisée en ce que** plusieurs pignons satellites (9.1 - 9.6) du train planétaire (8.1) sont guidés librement par le biais d'une plaque de centrage (11.1) entre des plaques de carter (12.1, 12.2) adjacentes, les pignons satellites (9.1 - 9.6) du train planétaire (8.1) présentant respectivement une ouverture de passage (13) et les ouvertures de passage (13) des pignons satellites (9.1 - 9.6) étant reliées par le biais d'un système de canaux (14) à au moins une entrée de pompe (17).

9. Pompe de dosage selon la revendication 8, **caractérisée en ce que** le système de canaux (14) présente plusieurs alésages de carter (15, 16.2, 16.3) dans les plaques de carter (12.1, 12.2, 12.3), lesquels alésages débouchent dans les ouvertures de passage (13) des pignons satellites (9.1, 9.2) du train planétaire (8.1 - 8.3).

10. Pompe de dosage selon la revendication 9, **caractérisée en ce que** plusieurs trains planétaires (8.1 - 8.3) sont retenus entre les plaques de carter (12.1 - 12.4) et **en ce que** les alésages de carter présentent plusieurs alésages d'entrée (16.2, 16.3) dans l'une des plaques de carter (12.1 - 12.4) et plusieurs alésages de distribution axiaux (15) dans les plaques de carter (12.1 - 12.4) disposées entre des trains planétaires (8.1 - 8.3) adjacents.

11. Pompe de dosage selon l'une des revendications 8 à 10, **caractérisée en ce que** les plaques de carter (12.1 - 12.4) présentent plusieurs rainures de distribution (18.1, 18.2) sur un côté tourné vers le train planétaire (8.1 - 8.3), lesquelles rainures s'étendent respectivement entre l'une des ouvertures de passage (13) et l'une parmi plusieurs zones d'entrée (27.1, 27.2) des trains planétaires (8.1 - 8.3).

12. Pompe de dosage selon l'une des revendications 8 à 11, **caractérisée en ce que** les trains planétaires (8.1 - 8.3) sont reliés à un arbre d'entraînement (19) et **en ce que** l'arbre d'entraînement (19) est accouplé à un moteur pas à pas (31).

13. Pompe de dosage selon la revendication 12, **caractérisée en ce que** le moteur pas à pas (31) est retenu à l'aide d'un carter (32) sur la plaque de carter extérieure (12.1) et **en ce que** l'arbre d'entraînement (19) est relié directement à un rotor (34) du moteur pas à pas (31).

14. Pompe de dosage selon l'une des revendications 8 à 13, **caractérisée en ce que** les sorties de pompe (7.1 - 7.6) associées à l'un des trains planétaires (8.1 - 8.3) dans l'une des plaques de carter (12.2 - 12.4) sont formées respectivement sous la forme d'un raccord enfichable (24).
